# EUROPÄISCHE PATENTSCHRIFT

(11) **EP 2 625 076 B1**
(45) Veröffentlichungstag und Bekanntmachung des Hinweises auf die Patenterteilung: **24.02.2016**
(21) Anmeldenummer: 11767003.4
(22) Anmeldetag: 07.10.2011
(51) Int. Cl.: B60T 8/36

(54) **HALTEELEMENT UND REGELUNGSMODUL MIT EINEM DERARTIGEN HALTEELEMENT.**
HOLDING ELEMENT AND CONTROL MODULE WITH A HOLDING ELEMENT OF THIS TYPE
ÉLÉMENT DE RETENUE ET MODULE DE RÉGULATION COMPORTANT UN TEL ÉLÉMENT DE RETENUE

(30) Priorität: 08.10.2010 DE 102010042177
(43) Veröffentlichungstag der Anmeldung: 14.08.2013
(73) Patentinhaber: Robert Bosch GmbH, 70442 Stuttgart (DE)
(72) Erfinder: MAIER, Herbert, 71672 Marbach (DE); KUEHNER, Karl-Friedrich, 74360 Ilsfeld (DE)
(86) Internationale Anmeldenummer: PCT/EP2011/067567
(87) Internationale Veröffentlichungsnummer: WO 2012/045865

(56) Entgegenhaltungen:
- EP-A2- 2 048 051
- JP-A- 2000 350 331
- JP-A- 2001 231 080
- US-A- 4 955 673
- US-A1- 2004 102 888
- US-B1- 6 171 540

## Beschreibung

Die Erfindung betrifft ein Halteelement, insbesondere für ein Hydraulikaggregat einer schlupfregelbaren Fahrzeugbremsanlage, mit einer Seitenwand an deren freiem Ende eine Aufnahme zum form- und/oder kraftschlüssigen Halten des Hydraulikaggregats vorgesehen ist und mit mindestens einem Befestigungselement zum Befestigen des Halteelements an einem Trägerteil, wobei das Halte-element zumindest im Wesentlichen einstückig ausgebildet ist.

Ferner betrifft die Erfindung ein Regelungsmodul, insbesondere für eine schlupfregelbare Fahrzeugbremsanlage, umfassend ein Hydraulikaggregat aus einem Hydraulikblock und einer elektronischen Steuereinheit, in der ein Drehratensensor und ein Beschleunigungssensor aufgenommen ist und mindestens ein das Hydraulikaggregat kraft- und/oder formschlüssig haltendes Halteelement.

### Stand der Technik

Halteelemente für Hydraulikaggregate in Kraftfahrzeugen sind aus dem Stand der Technik grundsätzlich bekannt. Dabei ist die Anbindung des Hydraulikaggregats an ein Trägerteil des Kraftfahrzeugs von Bedeutung. Um hier eine dauerhaft feste und mechanisch beanspruchbare Verbindung zu ermöglichen, ist ein Halteelement mit mindestens einem Befestigungselement und mit mindestens einer Aufnahme versehen, wobei das Befestigungselement zum Befestigen des Halteelements an einem Trägerteil des Kraftfahrzeugs, wie beispielsweise an einem Karosserieteil, und die Aufnahme zum Halten des Hydraulikaggregats am Halteelement dient. Um die Festigkeit beziehungsweise Steifheit und damit ein dauerhaftes Erfassen von nutzbaren elektronischen Signalen durch das Hydraulikaggregat zu ermöglichen, wird das Halteelement bekannterweise zumindest im Wesentlichen einstückig aus Stahl ausgebildet. Jedoch ist die Herstellung eines derartigen Halteelements aufwendig und führt zu einem verhältnismäßig schweren Bauteil.

Die EP 2 048 051 A2 offenbart ein Haltelement mit wenigstens einer ersten Seitenwand, die an einem freien Ende eine Aufnahme geeignet für ein form- und kraftschlüssiges Halten eines Hydraulikaggregats mittels Schrauben aufweist und mit mindestens einem Befestigungselement geeignet für das Befestigen des Halteelements an einem Trägerteil, wobei das Halteelement im wesentlichen einstückig ausgebildet ist und aus Kunststoff gefertigt ist.

Die Merkmale des Oberbegriffs von Anspruch 1 sind der EP 2 048 051 A2 entnommen.

### Offenbarung der Erfindung

Erfindungsgemäß ist daher vorgesehen, dass
- die erste Seitenwand wenigstens eine erste angeformte Versteifungsrippe aufweist,
   die radial oder strahlenförmig zu der Aufnahme verläuft und wenigstens eine erste zusätzliche Versteifungsrippe koaxial zu der Aufnahme verläuft,
- das Halteelement einen mit der ersten Seitenwand einstückigen Boden aufweist und
- am Boden wenigstens eine zweite, zusätzliche Versteifungsrippe ausgebildet ist, wobei die zweite, zusätzliche Versteifungsrippe auf der der Aufnahme abgewandten Seite des Bodens angebracht ist,
- und dass eine dritte, zusätzliche Versteifungsrippe am Boden des Halteelements auf der der Aufnahme zugewandten Seite des Bodens ausgebildet ist.

Die Versteifungsrippe oder die Versteifungsrippen sind angeformt, also einstückig mit dem Halteelement ausgebildet. Bei der Herstellung des Halteelements werden die Versteifungsrippen vorzugsweise durch eine entsprechende Guss- und/oder Spritzgussform geformt, beziehungsweise gebildet. Durch das erfindungsgemäße Ausrichten und Anordnen der Versteifungsrippe oder der Versteifungsrippen lässt sich die Steifigkeit des Halteelements auf einfache Art und Weise erhöhen. Das Halteelement weist zusätzlich zur Seitenwand einen Boden auf, welcher einstückig mit der Seitenwand ausgebildet ist. Erfindungsgemäß ist sowohl an dem Boden als auch an der Seitenwand jeweils mindestens eine Versteifungsrippe angeformt.

Erfindungsgemäß ist eine weitere Versteifungsrippe oder sind Versteifungsrippen auf der der Aufnahme zugewandten Seite des Bodens ausgebildet. Die Aufnahme des Halteelements, in welcher das Hydraulikaggregat bevorzugt formschlüssig gehalten ist, wird bevorzugt im selben Arbeitsgang mit dem auch die geometrische Ausbildung des Halteelements selbst erfolgt, gebildet. So weist vorzugsweise die eine Seitenwand wenigstens eine Aufnahme auf, durch welche eine Schraube oder ein Bolzen oder dergleichen geführt und in ein vorzugsweise in dem Hydraulikblock ausgebildetes Gewinde oder dergleichen eingeführt werden kann. Die Aufnahme weist an einer Stelle ihres Umfangs eine Öffnung auf, ist also radial offen ausgebildet, sodass eine bereits am Hydraulikblock vormontierte Schraube mit ihrem jeweiligen Schaft in die Öffnung seitlich einführbar ist. Hierdurch wird insbesondere die Montage des Hydraulikaggregats an das Halteelement vereinfacht.

Besonders bevorzugt sind die Versteifungsrippen des Haltelements derart ausgebildet und angeordnet, dass sich das in der Umgebung wahrnehmbare Betriebsgeräusch des Hydraulikaggregats während eines Schlupfregelbetriebs reduziert. Durch die geräuschoptimierte Ausbildung werden insbesondere während des Betriebs hervorgerufene Vibrationen vermieden und insbesondere Mindestanforderungen an die Eigenresonanz und die Amplitudenüberhöhung des Regelungsmoduls erfüllt. Auch wird durch die Versteifungsrippen das Halteelement derart versteift, dass Klappergeräusche vermieden werden.

Die Wahl von Anzahl, Form und Verlauf der Versteifungsrippen erlaubt eine gezielte Einflussnahme auf die Eigenelastizität des Haltelements. Vorgesehen ist das Halteelement zumindest bereichsweise elastisch verformbar auszubilden, um eine Dämpfung der auftretenden Vibrationen zu bewirken und um Signalstörungen am Drehratensensor oder am Beschleunigungssensor zu vermeiden. Auf zwischen Hydraulikaggregat und Haltelement anzuordnende zusätzliche elastische Dämpfungsmittel kann aufgrund der einstellbaren Eigenelastizität des Halteelements verzichtet werden, was wiederum Teile- und Montagekosten spart und das Gewicht weiter reduziert.

Gemäß einer vorteilhaften Weiterbildung der Erfindung ist vorgesehen, dass das Befestigungselement als Befestigungslasche ausgebildet ist. Gemäß einer bevorzugten Ausführungsform ist die Befestigungslasche zum Einschieben oder Einstecken in entsprechende Befestigungsaufnahmen des Trägerteils ausgebildet, um eine formschlüssige und gegebenenfalls kraftschlüssige Befestigung des Halteelements an dem Trägerteil auf einfache Art und Weise zu gewährleisten. Besonders bevorzugt ist die Befestigungslasche zum Bilden einer Rastverbindung und/oder eines Dämpfungselements zumindest bereichweise elastisch verformbar ausgebildet. So ist die Befestigungslasche beispielsweise zum Herstellen einer Klick-Verbindung beim Einschieben der Befestigungslasche in die Befestigungsaufnahme ausgebildet, wobei ein Abschnitt der Befestigungslasche in der Befestigungsaufnahme in eine Hintergriffsposition durch ihre Eigenelastizität verlagert wird. Die Ausbildung als Dämpfungselement vermindert oder verhindert die Übertragung von Vibrationen von dem Trägerteil auf das Halteelement beziehungsweise auf das Hydraulikaggregat und zurück.

Gemäß einer vorteilhaften Weiterbildung der Erfindung ist vorgesehen, dass die Befestigungslasche mit mindestens einer Öffnung versehen ist, sodass mit Hilfe eines trägerteilseitigen Bolzens oder eine Schraube das Halteelement einfach und dauerhaft am Trägerteil zu verankern ist.

Vorzugsweise weist die Befestigungslasche mindestens ein wenigstens bereichsweise von dem Kunststoff umgebenes Verstärkungselement, insbesondere aus Metall, auf. Das Verstärkungselement wird vorzugsweise bei der Herstellung des Halteelements mit Kunststoff umspritzt, sodass es bereichsweise oder vollständig in das Halteelement, insbesondere in die Befestigungslasche des Halteelements integriert ist.

Besonders bevorzugt ist das Verstärkungselement als Verstärkungshülse, insbesondere als Metallhülse, ausgebildet und vorzugsweise koaxial zu der Öffnung in der Befestigungslasche angeordnet. Hierdurch lässt sich insbesondere eine Schraubverbindung zwischen der Befestigungslasche und dem Trägerteil sicher und dauerhaft gewährleisten, da hohe Anpresskräfte durch die Verstärkungshülse aufgenommen werden können. Die Öffnungen in den Befestigungslaschen sind vorzugsweise langlochartig ausgebildet, um insbesondere ein Anpassen der Position des Halteelements an dem Trägerteil zu ermöglichen. In diesem Fall ist vorzugsweise auch die Metallhülse langlochartig geformt. Alternativ kann die Öffnung der Befestigungslasche und/oder die Öffnung in der Seitenwand auch einen kreisförmigen Querschnitt aufweisen.

Das erfindungsgemäße Regelungsmodul zeichnet sich durch die Ausbildung seines Halteelements gemäß den oben stehenden Ausführungen aus. Das Regelungsmodul ist somit einfach und kostengünstig montierbar, lässt sich dauerhaft fest an einem Trägerteil des Kraftfahrzeugs, insbesondere an einem Karosserieteil des Kraftfahrzeugs, befestigen, und weist ein deutlich reduziertes Gesamtgewicht gegenüber herkömmlichen Regelungsmodulen auf.

Im Folgenden soll die Erfindung anhand der Zeichnung näher erläutert werden. Dazu zeigen
- Figur 1: in perspektivischer Darstellung ein Halteelement mit Hydraulikaggregat, befestigt an einem Trägerteil,
- Figur 2: ein Halteelement in einer perspektivischen Einzelteildarstellung,
- Figur 3: eine zweite Ausführungsform des Halteelements in einer perspektivischen Darstellung und
- Figur 4: eine dritte Ausführungsform des Halteelements, ebenfalls in perspektivischer Darstellung.

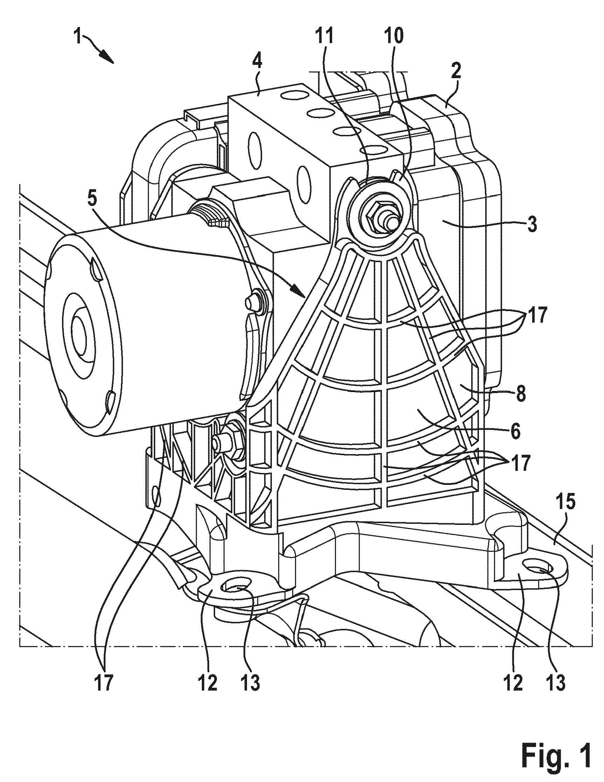

Figur 1 zeigt in perspektivischer Darstellung ein Hydraulikaggregat 1 einer schlupfregelbaren Kraftfahrzeugbremsanlage. Dieses Hydraulikaggregat 1 umfasst einen Hydraulikblock 4 und eine daran angeordnete elektronische Steuereinheit 3, in die beispielsweise ein Drehratensensor 2 und/oder ein Beschleunigungssensor integriert ist. Das Hydraulikaggregat 1 ist in Aufnahmen 11 eines Halteelements 6 aufgenommen und mittels dieses Haltelements 6 an einem Trägerteil 15, beispielsweise einem Karosserieteil eines Kraftfahrzeugs, befestigt.

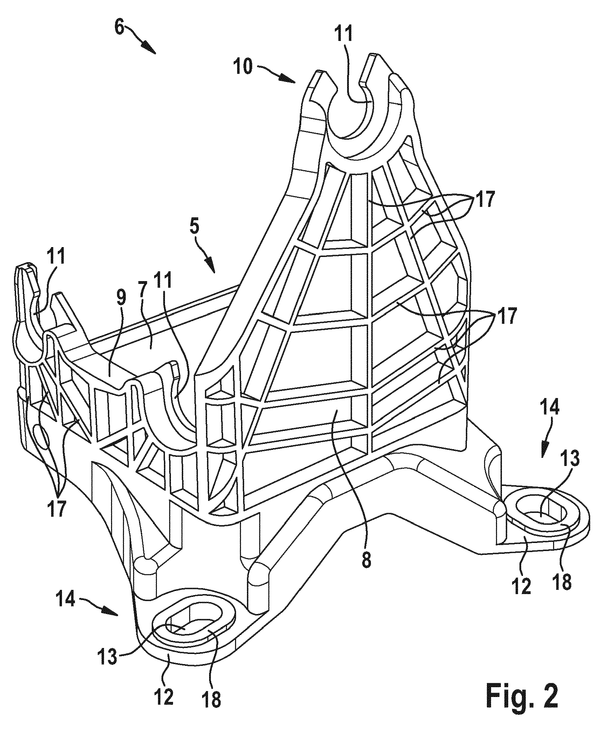

Das Halteelement 6 ist in der Figur 2 in einer perspektivischen Darstellung gezeigt. Es ist im Wesentlichen aus Kunststoff in einem Stück gefertigt und weist einen Boden 7, eine erste Seitenwand 8 sowie zumindest eine zweite Seitenwand 9 auf, die jeweils einstückig mit dem Boden 7 und der jeweils anderen Seitenwand ausgebildet ist. Boden 7 und Seitenwände 8 und 9 bilden miteinander eine gemeinsame Ecke aus. Die beiden Seitenwände 8 und 9 stehen im Wesentlichen in einem rechten Winkel zueinander, wobei die Seitenwand 8 gemäß dem vorliegenden Ausführungsbeispiel höher ausgebildet ist als die Seitenwand 9. Die Breite der Seitenwand 8 nimmt in etwa ab der Höhe der Seitenwand 9 bis zu ihrem freien Ende 10 hin ab. An ihrem freien Ende 10 weist die Seitenwand 8 eine erste Aufnahme 11 mit im Wesentlichen kreisrundem Querschnitt auf. Die Aufnahme 11 ist jedoch radial, beziehungsweise randoffen ausgebildet, das heißt sie weist eine Radialöffnung auf, durch die beispielsweise eine Schraube oder ein Bolzens mit ihrem jeweiligen Schaft seitlich einführbar ist. An der Seitenwand 9 sind ebenfalls zwei entsprechend ausgebildete Aufnahmen 11 vorgesehen. Die Radialöffnungen aller Aufnahmen 11 weisen in die selbe Raumrichtung, sodass am Gehäuse 4 vormontierten Schrauben oder Bolzen ohne Weiteres eingeführt werden können. Auf diese Weise lässt sich das Hydraulikaggregat 1 einfach am Halteelement 6 aufnehmen und befestigen.

Am Boden 7 weist das Halteelement 6 nach außen abstehende Befestigungslaschen 12 auf. Während in Figuren 1 und 2 lediglich zwei Befestigungslaschen 12 erkennbar sind, ist das Halteelement 6 vorzugsweise mit drei oder mehr Befestigungslaschen 12 ausgestattet. Die Befestigungslaschen 12 sind ebenfalls einstückig mit dem Halteelement 6 verbunden und weisen jeweils eine Öffnung 13 in Form eines Langlochs auf. Die Befestigungslaschen 12 mit den darin ausgebildeten Öffnungen 13 dienen als Befestigungselemente 14, mittels denen das Halteelement 6 an dem in Figur 1 dargestellten Trägerteil 15 befestigbar ist. Das Trägerteil 15 kann beispielsweise ein Karosserieteil eines Kraftfahrzeugs sein.

An das Halteelement 6 ist eine Vielzahl von Versteifungsrippen 17 angeformt, von denen hier beispielhaft nur einige mit Bezugszeichen versehen sind. Die Versteifungsrippen 17 sind somit einstückig mit dem Halteelement 6 ausgebildet. Insbesondere an der Seitenwand 8 sind die Versteifungsrippen 17 derart ausgebildet und/oder ausgerichtet, dass sich einige der Versteifungsrippen 17, im Wesentlichen koaxial zum Umfang der Aufnahme 11 verlaufend, über die Rückseite der Seitenwand 8 erstrecken, während andere Versteifungsrippen 17 im Wesentlichen radial oder strahlenförmig zum Umfang der Aufnahme 11 verlaufen. Zumindest strahlenförmig verlaufende Versteifungsrippen 17 sind auch an den Aufnahmen 11 der Seitenwand 9 vorgesehen.

Die Versteifungsrippen 17 sind zweckmäßigerweise derart ausgebildet und/oder ausgerichtet, dass sie die Steifigkeit und Dauerbelastbarkeit des aus Kunststoff gefertigten Halteelements 6 dauerhaft gewährleisten und insbesondere die störungssignalfreie Funktion des in der Steuereinheit 3 integrierten Drehratensensors 2 und/oder Beschleunigungssensors sicherstellen.

Figur 2 zeigt eine Weiterbildung des in Figur 1 dargestellten Halteelements 6 insoweit, als dass den Befestigungslaschen 12 Verstärkungselemente 18 zugeordnet sind. Die Verstärkungselemente 18 sind dabei bevorzugt als Verstärkungshülsen aus Metall gefertigt und in die jeweilige Befestigungslasche koaxial zu der jeweiligen Öffnung 13 angeordnet. Gemäß dem dargestellten Ausführungsbeispiel in Figur 2 sind die Verstärkungselemente 18 von dem Kunststoff des Halteelements 6 vollständig umgeben. Die Verstärkungselemente 18 sind zweckmäßigerweise entsprechend der Langlochform der Öffnung 13 ausgebildet. Durch die gezielte Auswahl des Materials der Verstärkungselemente 18 lässt sich das Halteelement 6 an jeder denkbaren Oberfläche beziehungsweise an jedem denkbaren Trägerteil 15, das beispielsweise aus Stahl oder Aluminium gefertigt sein kann, mit Hilfe von z.B. Schrauben dauerhaft befestigen. Der Schaft dieser Schrauben ragt durch die Verstärkungselemente 18 hindurch, während sich der Schraubenkopf stirnseitig auf dem Hülsenrand abstützt. Zudem erhöhen die Verstärkungselemente 18 die Festigkeit des Halteelements 6 gezielt im Bereich der Befestigungslaschen 12. Insgesamt weist somit das aus Kunststoff gefertigte Halteelement 6 im Vergleich zu bekannten Halteelementen aus dem Stand der Technik ein geringeres Gewicht bei unveränderter Steifigkeit auf.

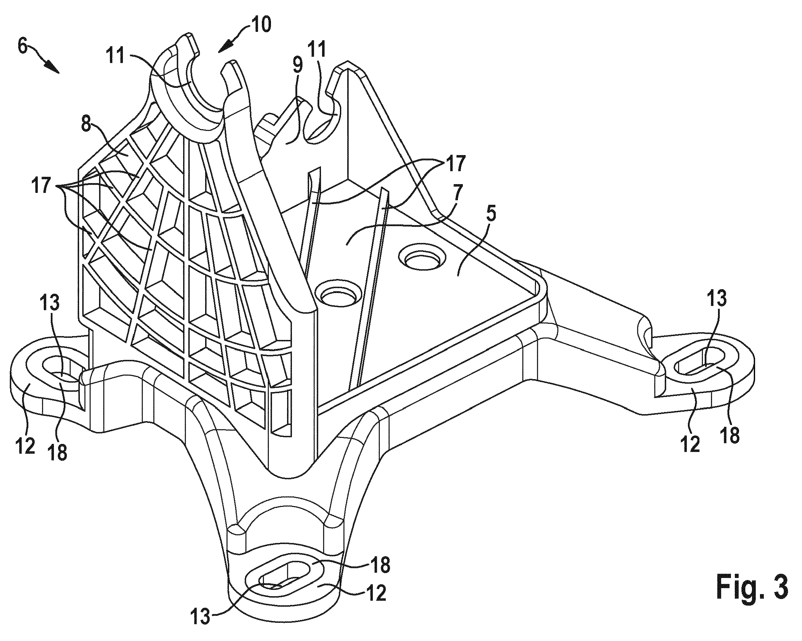

Figur 3 zeigt eine weitere Ausführungsform des Halteelements 6 in einer perspektivischen Darstellung, die sich von der vorhergehenden Ausführungsform dahingehend unterscheidet, dass auch auf dem Boden 7 und zwar auf dessen der Aufnahme 11 zugewandten Seite zusätzliche Versteifungsrippen 17 vorgesehen beziehungsweise angeformt sind. Im Übrigen ist in dieser Darstellung eine dritte der Befestigungslaschen 12 zu erkennen. Die Verstärkungselemente 18 sind entlang ihrer Mantelaußenwand mit dem Kunststoff des Halteelements 6 umspritzt beziehungsweise von der jeweiligen Befestigungslasche 12 eingehaust. Hierdurch ergibt sich insbesondere der Vorteil, dass sich die Verstärkungselemente 18 entsprechend der Ausbildung des Trägerteils 15 (Fig.1) materialtechnisch derart wählen lassen, dass eine besonders sichere und dauerhafte Verbindung gewährleistet werden kann.

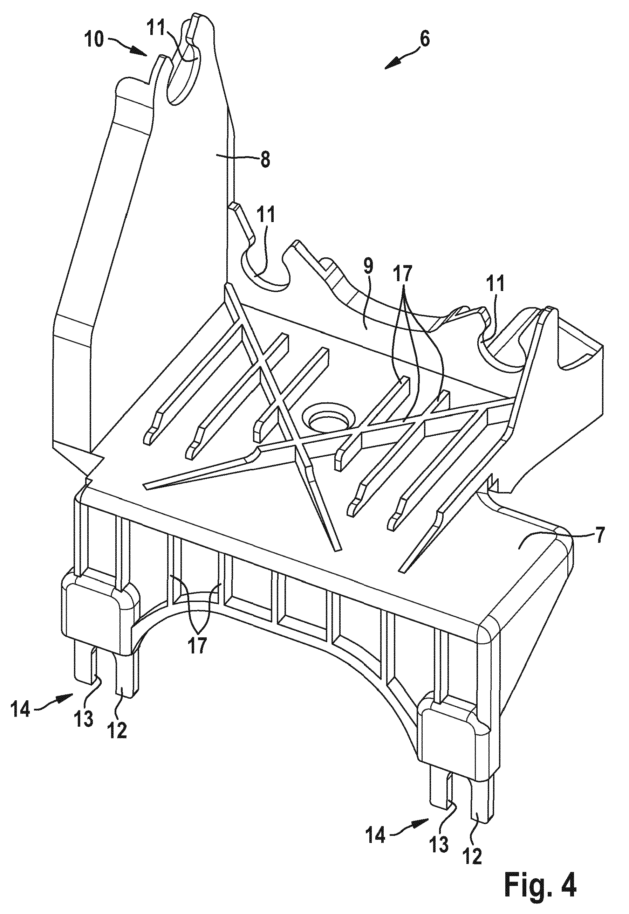

Figur 4 zeigt eine weitere mögliche Ausführungsform des Halteelements 6 in einer perspektivischen Darstellung. Das Halteelement 6 gemäß dieser Ausführungsform unterscheidet sich dahingehend von den vorhergehenden Ausführungsformen, dass die Befestigungslaschen 12 senkrecht zum Boden 7 ausgerichtet sind. Darüber hinaus sind die Öffnungen 13 randoffen ausgebildet. In einer hier nicht dargestellten Ausführungsform können die Befestigungselemente 14 auch zumindest bereichsweise elastisch verformbar ausgebildet sein, um als Dämpfungselemente zu wirken. Ebenso ist es denkbar, die Befestigungselemente 14 zum Bilden einer Rastverbindung auszubilden, wozu sie vorzugsweise zumindest bereichsweise elastisch verformbar ausgebildet sind.

Alle Versteifungsrippen 17 sind vorteilhafterweise geräuschoptimiert ausgebildet, sodass insbesondere die Anforderungen hinsichtlich der mechanischen Stabilität des Halteelements 6 und der Anforderungen an die erste Resonanzfrequenz erfüllt werden, sodass sich das Halteelement 6 beziehungsweise das Hydraulikaggregat 1 insbesondere für Applikationen in Bremssystemen, wie beispielsweise ESP®-Systeme (ESP® = elektronisches Stabilitätsprogramm) oder ABS-Systeme (ABS = Antiblockiersystem) oder auch ASR-Systeme (ASR = Antriebsschlupfregelung) geeignet sind.

Die oben beschriebenen Merkmale bezüglich der unterschiedlichen Ausführungsformen lassen sich selbstverständlich auch auf beliebige Art und Weise miteinander kombinieren.

## Patentansprüche

1. Halteelement (6) für ein Hydraulikaggregat (1) einer schlupfregelbaren Fahrzeugbremsanlage, mit wenigstens einer ersten Seitenwand (8),
die an einem freien Ende eine Aufnahme (11) zum form- und kraftschlüssigen Halten des Hydraulikaggregats (1) aufweist und
mit mindestens einem Befestigungselement (14) zum Befestigen des Halteelements (6) an einem Trägerteil (15), wobei das Halteelement (6) zumindest im Wesentlichen einstückig ausgebildet ist, wobei
- das Halteelement (6) zumindest im wesentlichen aus Kunststoff gefertigt ist,
- das Halteelement eine zweite Seitenwand (9) aufweist und
- der Boden (7), die erste Seitenwand (8) und die zweite Seitenwand (9) jeweils senkrecht zueinander angeordnet sind und miteinander eine gemeinsame Ecke ausbilden, **dadurch gekennzeichnet, dass**
- die erste Seitenwand (8) wenigstens eine erste angeformte Versteifungsrippe (17) aufweist, die radial oder strahlenförmig zu der Aufnahme (11) verläuft und wenigstens eine erste zusätzliche Versteifungsrippe (17) koaxial zu der Aufnahme (11) verläuft,
- das Halteelement (6) einen mit der ersten Seitenwand (8) einstückigen Boden (7) aufweist und dass am Boden (7) wenigstens eine zweite, zusätzliche Versteifungsrippe (17) ausgebildet ist, wobei die zweite, zusätzliche Versteifungsrippe (17) auf der der Aufnahme (11) abgewandten Seite des Bodens (7) angebracht ist,
- und dass eine dritte, zusätzliche Versteifungsrippe (17) am Boden (7) des Halteelements (6) auf der der Aufnahme (11) zugewandten Seite des Bodens (7) ausgebildet ist.

2. Halteelement nach Anspruch 1, **dadurch gekennzeichnet, dass** das Befestigungselement (14) als eine mit dem Haltelement (6) verbundene Befestigungslasche (12) ausgebildet ist.

3. Halteelement nach Anspruch 2, **dadurch gekennzeichnet, dass** die Befestigungslasche (12) mit mindestens einer Öffnung (13) ausgebildet ist.

4. Halteelement nach Anspruch 3, **dadurch gekennzeichnet, dass** die Befestigungslasche (12) mindestens ein wenigstens bereichsweise mit dem Kunststoff umspritztes Verstärkungselement (18), insbesondere aus Metall, aufweist.

5. Halteelement nach Anspruch 4, **dadurch gekennzeichnet, dass** das Verstärkungselement (18) als Hülse ausgebildet ist.

6. Halteelement nach Anspruch 5, **dadurch gekennzeichnet, dass** die Hülse koaxial zu der Öffnung (13) angeordnet ist.

7. Regelungsmodul für eine schlupfregelbare Fahrzeugbremsanlage, umfassend ein Hydraulikaggregat (1) aus einem Hydraulikblock (4) und einer elektronischen Steuereinheit (3), in der wenigstens ein Drehratensensor (2) und/oder ein Beschleunigungssensor aufgenommen ist und mindestens ein, das Hydraulikaggregat (2) kraft- und formschlüssig aufnehmendes Halteelement (6),
**gekennzeichnet durch** die Ausbildung des Halteelements (6) nach einem oder mehreren der vorhergehenden Ansprüche.

## Claims

1. Retaining element (6) for a hydraulic unit (1) of a vehicle brake system with traction control, having at least one first side wall (8), which at a free end comprises a mount (11) for the positively interlocking and non-positive retention of the hydraulic unit (1), and having at least one fastener (14) for fastening the retaining element (6) to a supporting part (15), the retaining element (6) being at least substantially integrally formed,
- the retaining element (6) being manufactured at least substantially from plastic,
- the retaining element comprising a second side wall (9) and
- the base (7), the first side wall (8) and the second side wall (9) each being arranged perpendicular to one another and forming a common corner with one another,
**characterized in that**
- the first side wall (8) comprises at least one first molded-on stiffening rib (17), which runs radially to the mount (11) and at least one first additional stiffening rib (17) runs coaxially with the mount (11),
- the retaining element (6) comprises a base (7) integrally formed with the first side wall (8) and **in that** at least a second additional stiffening rib (17) is formed on the base (7), the second, additional stiffening rib (17) being attached to the side of the base (7) remote from the mount (11),
- and **in that** a third, additional stiffening rib (17) is formed on the base (7) of the retaining element (6) on the side of the base (7) facing the mount (11).

2. Retaining element according to Claim 1, fe**characterized in that** the fastener (14) is embodied as a fastening clip (12) connected to the retaining element (6).

3. Retaining element according to Claim 2, **characterized in that** the fastening clip (12) is formed with at least one opening (13).

4. Retaining element according to Claim 3, **characterized in that** the fastening clip (12) comprises at least one reinforcing element (18), especially a metal one, at least locally coated with the plastic.

5. Retaining element according to Claim 4, **characterized in that** the reinforcing element (18) is embodied as a sleeve.

6. Retaining element according to Claim 5, **characterized in that** the sleeve is arranged coaxially with the opening (13).

7. Control module for a vehicle brake system with traction control, comprising a hydraulic unit (1) consisting of a hydraulic block (4) and an electronic control unit (3), in which at least one angular rate sensor (2) and/or an acceleration sensor is accommodated, and at least one retaining element (6) receiving the hydraulic unit (2) non-positively and through positive interlock, **characterized by** the formation of the retaining element (6) according to one or more of the preceding claims.

## Revendications

1. Élément de retenue (6) pour une unité hydraulique (1) d'une installation de freinage de véhicule à régulation d'antipatinage, comprenant au moins une première paroi latérale (8) qui présente à une extrémité libre un logement (11) pour retenir l'unité hydraulique (1) par engagement par correspondance de formes et par force et comprenant au moins un élément de fixation (14) pour la fixation de l'élément de retenue (6) sur une partie de support (15), l'élément de retenue (6) étant réalisé au moins sensiblement d'une seule pièce,
- l'élément de retenue (6) étant fabriqué au moins sensiblement en plastique,
- l'élément de retenue présentant une deuxième paroi latérale (9) et
- le fond (7), la première paroi latérale (8) et la deuxième paroi latérale (9) étant à chaque fois disposés perpendiculairement les uns aux autres et constituant ensemble un coin commun, **caractérisé en ce que**
- la première paroi latérale (8) présente au moins une première nervure de renforcement façonnée (17) qui s'étend radialement ou en forme de rayon vers le logement (11) et au moins une première rainure de renforcement supplémentaire (17) s'étendant coaxialement au logement (11),
- l'élément de retenue (6) présente un fond (7) réalisé d'une seule pièce avec la première paroi latérale (8) et **en ce qu'**au moins une deuxième nervure de renforcement supplémentaire (17) est réalisée au niveau du fond (7), la deuxième nervure de renforcement supplémentaire (17) étant montée sur le côté du fond (7) opposé au logement (11),
- et **en ce qu'**une troisième nervure de renforcement supplémentaire (17) est réalisée au niveau du fond (7) de l'élément de retenue (6) sur le côté du fond (7) tourné vers le logement (11).

2. Élément de retenue selon la revendication 1, **caractérisé en ce que** l'élément de fixation (14) est réalisé sous la forme d'une patte de fixation (12) connectée à l'élément de retenue (6).

3. Élément de retenue selon la revendication 2, **caractérisé en ce que** la patte de fixation (12) est réalisée avec au moins une ouverture (13).

4. Élément de retenue selon la revendication 3, **caractérisé en ce que** la patte de fixation (12) présente au moins un élément de renforcement (18) au moins en partie surmoulé avec le plastique, en particulier en métal.

5. Élément de retenue selon la revendication 4, **caractérisé en ce que** l'élément de renforcement (18) est réalisé sous forme de douille.

6. Élément de retenue selon la revendication 5, **caractérisé en ce que** la douille est disposée coaxialement par rapport à l'ouverture (13).

7. Module de régulation pour une installation de freinage de véhicule à régulation d'antipatinage, comprenant une unité hydraulique (1) constituée d'un bloc hydraulique (4) et d'une unité de commande électronique (3) dans laquelle sont reçus au moins un capteur de vitesse de rotation (2) et/ou un capteur d'accélération et au moins un élément de retenue (6) recevant par engagement par force et par correspondance de forme l'unité hydraulique (2),
**caractérisé par** la réalisation de l'élément de retenue (6) selon l'une quelconque ou plusieurs des revendications précédentes.
